(19) Europäisches Patentamt

European Patent Office

Office européen des brevets

(11) **EP 4 763 948 A1**

(12) **EUROPEAN PATENT APPLICATION**
published in accordance with Art. 153(4) EPC

(43) Date of publication:
**24.06.2026 Bulletin 2026/26**

(21) Application number: **23949219.2**

(22) Date of filing: **06.11.2023**

(51) International Patent Classification (IPC):
*C09K 17/32* (2006.01)    *C09K 21/06* (2006.01)
*C09K 103/00* (2006.01)

(52) Cooperative Patent Classification (CPC):
**C09K 17/32; C09K 21/06;** C09K 2103/00

(86) International application number:
**PCT/KR2023/017699**

(87) International publication number:
**WO 2025/037674 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.08.2023 KR 20230107186**

(71) Applicant: **Asia Nanotech Co., Ltd**
**Seoul 06640 (KR)**

(72) Inventors:
• **LEE, Choong Hoon**
**Seoul 06635 (KR)**
• **KIM, Minseok**
**Seoul 02756 (KR)**
• **LEE, Hyung Jun**
**Seoul 04717 (KR)**
• **LEE, Jai Sung**
**Cheongju-si, Chungcheongbuk-do 28696 (KR)**
• **PARK, Jaejun**
**Cheongju-si, Chungcheongbuk-do 28160 (KR)**

(74) Representative: **Plougmann Vingtoft a/s**
**Strandvejen 70**
**2900 Hellerup (DK)**

(54) **WILDFIRE SUPPRESSANT AND FOREST DAMAGE RESTORATION AGENT COMPRISING ECO-FRIENDLY BIODEGRADABLE SOIL COAGULANT**

(57)   The present invention relates to a wildfire spread suppressing agent and a forest damage restoration agent comprising a biodegradable eco-friendly soil coagulant, wherein the eco-friendly soil coagulant of the present invention comprises starch and nanocellulose, and an aldehyde group of the starch is acetal-crosslinked with the nanocellulose, thereby being non-toxic and biodegradable and capable of absorbing a large amount of water, and thus can function as a wildfire spread suppressing agent and a forest damage restoration agent.

[Figure 1]

Obtaining nanocellulose having a viscosity of 3,000 to 500,000 cPs from at least one selected from the group consisting of cotton, woody biomass, and non-woody biomass ~ (S10)

Mixing the nanocellulose obtained in step (S10) with starch to prepare a hydrogel ~ (S20)

Drying the hydrogel prepared in step (S20) to obtain a dried hydrogel ~ (S30)

Pulverizing a product of step (S30) to obtain the eco-friendly soil coagulant ~ (S40)

EP 4 763 948 A1

**Description**

TECHNICAL FIELD

This patent application claims priority to and the benefit of Korean Patent Application No. 10-2023-0107186 filed with the Korean Intellectual Property Office on August 16, 2023, the disclosure of which is incorporated herein by reference.

The present disclosure relates to a wildfire spread suppressing agent and a forest damage restoration agent comprising a biodegradable eco-friendly soil coagulant.

BACKGROUND ART

Topsoil refers to soil forming the geological surface layer and generally means the soil extending to a depth of up to 30 cm from the ground surface. Topsoil is formed by the addition of various naturally derived organic materials and ash to inorganic materials generated through the weathering of rocks. Compared to subsoil and bedrock layers in which the movement of moisture and nutrients is difficult, topsoil directly or indirectly affects plant growth, mitigates climate change through carbon storage, and provides a suitable environment for microbial activity, thereby playing an important role in the environment and ecosystem.

The Republic of Korea is highly vulnerable to soil erosion both naturally and artificially due to rainfall characteristics resulting from climate change and land-use patterns. According to the Ministry of Environment's "Preliminary Survey on Nationwide Topsoil Erosion (2012)," it was reported that in 30% of the national territory, surface soil loss exceeds 3.3 kg per 1 $m^2$ annually. Considering current and future climate change trends in which localized heavy rainfall events are becoming more frequent even under similar annual precipitation levels compared to the past, there is concern that an even greater amount of topsoil loss will occur.

In particular, topsoil erosion weakens the environmental regulation functions of topsoil, such as the purification of pollutants and the regulation of air and water quality. When eroded topsoil flows into rivers and streams, it causes water pollution such as riverbed elevation increase and eutrophication. In addition, topsoil is a finite resource that requires an extremely long period of more than 200 years to form a 1 cm-thick layer. Therefore, beyond primary damage such as reduced plant growth due to topsoil loss, eroded topsoil entering tributaries and rivers accelerates eutrophication in rivers and lakes, leading to algal blooms and causing adverse effects on ecosystems.

To address these phenomena, the United States implements preventive soil resource conservation policies under the "Soil Conservation Act," and Germany grants administrative authorities the power to impose fines and criminal penalties for violations of provisions protecting topsoil from destruction and depletion under the "Federal Soil Protection Act." Although various advanced countries are making efforts to establish legal and institutional measures for topsoil conservation, the Republic of Korea lacks clear countermeasures, and responses to topsoil erosion remain at a rudimentary level compared to those of advanced countries.

Methods for preventing topsoil erosion include vegetative techniques and engineering techniques applied according to the degree of erosion; however, these methods have disadvantages in that they require a long time to change land use from planning to implementation and incur excessive costs.

The most effective method for preventing topsoil loss within a short time and at low cost without changing land use is the use of a soil coagulant. Currently, most soil coagulants are manufactured using chemical absorbents, namely super absorbent polymers (SAPs), as raw materials. Chemical absorbents absorb water to form hydrogels, and through the adsorption properties generated thereby, increase bonding between soil particles, making it easy and economical to reduce soil erosion. However, SAPs require approximately 500 years or more to biodegrade, and when soil coagulants containing SAPs are lost, they become a source of microplastics, causing ecosystem destruction and posing fatal threats to the human body due to bioaccumulation. Furthermore, although absorbent polymers in their polymeric state are known to be non-toxic, there is controversy regarding the toxicity of their monomers upon degradation, and thus significant problems exist in using such SAPs as soil coagulants.

Accordingly, in order to prevent topsoil erosion, there is an urgent need to develop an eco-friendly soil coagulant that possesses the water retention capability of SAPs while being harmless and capable of natural biodegradation in the ecosystem.

DISCLOSURE OF INVENTION

Technical Problem

Accordingly, in order to solve the above-described technical problems, the present inventors made efforts to develop an eco-friendly soil coagulant comprising nanocellulose, which has a high water retention capability, is non-toxic and biodegradable, and is capable of absorbing a large amount of water.

As a result, it was confirmed that the water retention capability and biodegradability of a soil coagulant are remarkably excellent, the soil coagulant being prepared by additionally mixing natural polysaccharides such as starch with a suspension using various grades of nanocellulose produced from raw materials including not only conventional pulp derived from cotton and woody biomass, but also various non-woody lignocellulose-based biomass materials such as banana pseudostem, sugarcane, and oil palm, and then granulating the mixture by heating, mixing, drying, and pulverizing.

Accordingly, an object of the present invention is to provide a biodegradable eco-friendly soil coagulant which is non-toxic and biodegradable, is capable of absorbing a large amount of water, and can function as a wildfire spread suppressing agent and a forest damage restoration agent.

Solution to Problem

In order to achieve the above object, the present invention provides an eco-friendly soil coagulant comprising starch and nanocellulose, wherein the nanocellulose is obtained from at least one selected from the group consisting of cotton, woody biomass, and non-woody biomass, wherein the nanocellulose has a viscosity of 3,000 to 500,000 cPs, and wherein an aldehyde group of the starch is acetal-crosslinked with a hydroxyl group of the nanocellulose to form a polymer.

In addition, the present invention provides a method for preparing an eco-friendly soil coagulant, comprising: (S10) obtaining nanocellulose having a viscosity of 3,000 to 500,000 cPs from at least one selected from the group consisting of cotton, woody biomass, and non-woody biomass; (S20) mixing the nanocellulose obtained in step (S10) with starch to prepare a hydrogel; (S30) drying the hydrogel prepared in step (S20) to obtain a dried hydrogel; and (S40) pulverizing a product of step (S30) to obtain the eco-friendly soil coagulant.

In addition, the present invention provides a wildfire spread suppressing agent comprising the eco-friendly soil coagulant, the eco-friendly soil coagulant comprising starch and nanocellulose, wherein the nanocellulose is obtained from at least one selected from the group consisting of cotton, woody biomass, and non-woody biomass, wherein the nanocellulose has a viscosity of 3,000 to 500,000 cPs, and wherein an aldehyde group of the starch is acetal-crosslinked with a hydroxyl group of the nanocellulose to form a polymer.

In addition, the present invention provides a forest damage restoration agent comprising the eco-friendly soil coagulant, the eco-friendly soil coagulant comprising starch and nanocellulose, wherein the nanocellulose is obtained from at least one selected from the group consisting of cotton, woody biomass, and non-woody biomass, wherein the nanocellulose has a viscosity of 3,000 to 500,000 cPs, and wherein an aldehyde group of the starch is acetal-crosslinked with a hydroxyl group of the nanocellulose to form a polymer.

Advantageous Effects of Invention

The present invention relates to a wildfire spread suppressing agent and a forest damage restoration agent comprising a biodegradable eco-friendly soil coagulant, the biodegradable eco-friendly soil coagulant comprising starch and nanocellulose, wherein an aldehyde group of the starch is acetal-crosslinked with the nanocellulose to form a polymer. The soil coagulant of the present invention is non-toxic and biodegradable and is capable of absorbing a large amount of water, and thus can function as a wildfire spread suppressing agent and a forest damage restoration agent.

BRIEF DESCRIPTION OF DRAWINGS

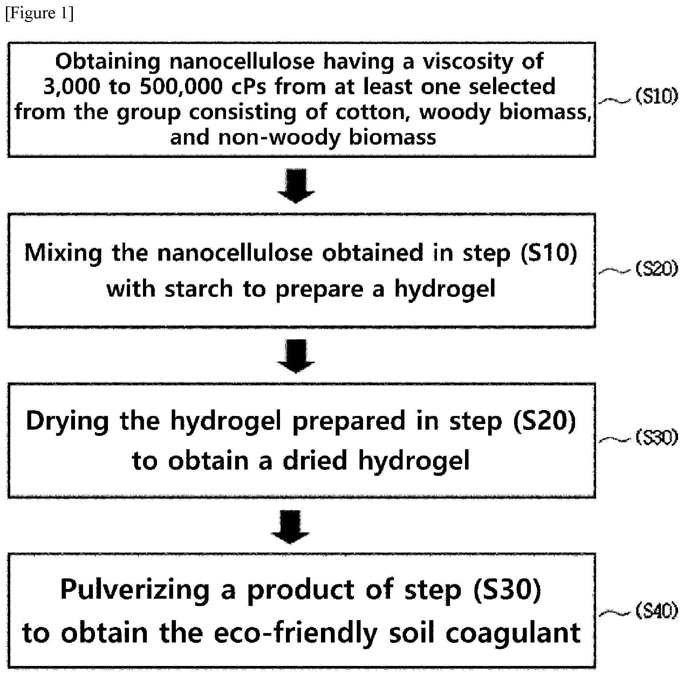

FIG. 1 is a schematic diagram illustrating an overall preparation process of a biodegradable eco-friendly soil coagulant according to one preparation example of the present invention.

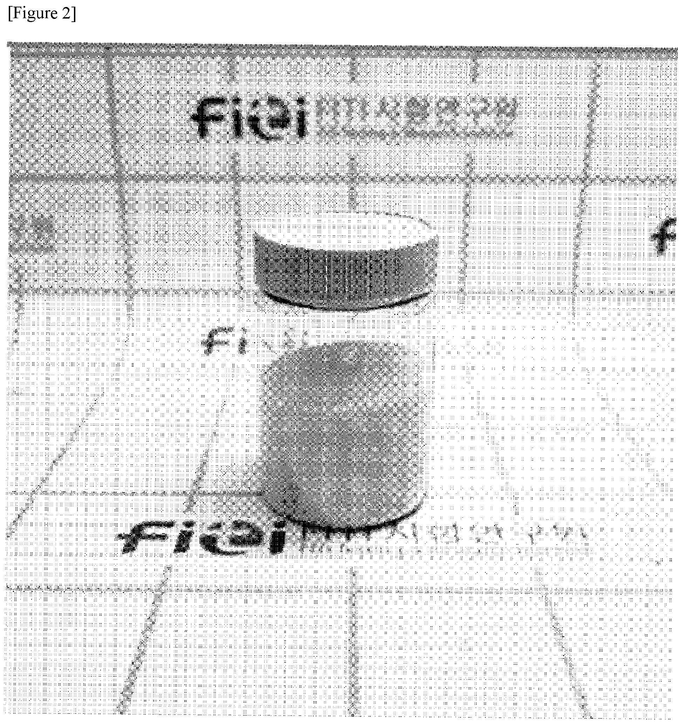

FIG. 2 is a view illustrating a sample of a biodegradable eco-friendly soil coagulant according to one preparation example of the present invention before evaluation of biodegradability.
FIG. 3 is a graph illustrating water absorption capacity of a biodegradable eco-friendly soil coagulant according to one preparation example of the present invention over time, measured for 6 hours.
FIG. 4 is a graph illustrating water absorption capacity of a biodegradable eco-friendly soil coagulant according to one preparation example of the present invention over time, measured for 5 days.
FIG. 5 is a graph illustrating water absorption capacity of a biodegradable eco-friendly soil coagulant according to one preparation example of the present invention over time, measured for 28 days.
FIG. 6 is a graph illustrating water absorption capacity of a biodegradable eco-friendly soil coagulant according to one preparation example of the present invention over time, measured for 112 days.

BEST MODE FOR CARRYING OUT THE INVENTION

An eco-friendly soil coagulant comprising starch and nanocellulose, wherein the nanocellulose is obtained from at least one selected from the group consisting of cotton, woody biomass, and non-woody biomass, wherein the nanocellulose has a viscosity of 3,000 to 500,000 cPs, and wherein an aldehyde group of the starch is acetal-crosslinked with a hydroxyl group of the nanocellulose to form a polymer.

MODE FOR CARRYING OUT THE INVENTION

Hereinafter, the present invention will be described in more detail.

The present invention relates to an eco-friendly soil coagulant comprising starch and nanocellulose, wherein the nanocellulose is obtained from at least one selected from the group consisting of cotton, woody biomass, and non-woody biomass, wherein the nanocellulose has a viscosity of 3,000 to 500,000 cPs, and wherein an aldehyde group of the starch is acetal-crosslinked with a hydroxyl group of the nanocellulose to form a polymer.

In the present invention, the soil coagulant is characterized in that it does not include a separate chemical crosslinking agent or crosslinker.

In the present invention, the soil coagulant may be prepared by a solution process, in which an aldehyde group of the starch reacts with a hydroxyl group of the nanocellulose to form a polymer through acetal crosslinking.

Starch is composed of amylose and amylopectin, and amylose and amylopectin each form glycosidic bonds between monosaccharides. Through the glycosidic bonds of the starch, the soil coagulant forms a three-dimensional network structure by hydrogen bonding between natural polysaccharide chains, thereby trapping water therein.

In the present invention, the starch may be at least one selected from the group consisting of rhizome starch, cereal starch, and glutinous cereal starch; for example, the starch may be rhizome starch, but is not limited thereto.

In the present invention, the rhizome starch may be at least one selected from the group consisting of potato, sweet potato, taro, and tapioca.

In the present invention, the cereal starch may be at least one selected from the group consisting of rice, wheat, barley, and corn, but is not limited thereto.

In the present invention, the glutinous cereal starch may be at least one selected from the group consisting of glutinous rice, sorghum, foxtail millet, and glutinous corn, but is not limited thereto.

In one embodiment of the present invention, the starch may be tapioca.

In one embodiment of the present invention, the starch may be corn.

In one embodiment of the present invention, the starch may be tapioca and corn, and a weight ratio of the tapioca to the corn may be 4:1, 3:1, 2:1, 4:1, 3:1, or 2:1, for example, 1:1, but is not limited thereto.

In the present invention, the term "oxidized starch" refers to a product obtained by oxidation of starch. The oxidized starch may be obtained in the form of dialdehyde starch by oxidizing starch with sodium hypochlorite and/or hydrogen peroxide. Aldehyde groups have high reactivity and are capable of reacting with various reactive groups. As the degree of oxidation of oxidized starch increases, aging phenomena decrease, viscosity stability is improved, and the extent of viscosity increase upon cooling is reduced.

In the present invention, the term "aging" refers to a phenomenon in which, when starch is left standing, hydrogen bonds are re-formed between linear portions of amylose molecular structures to form a crystalline structure.

In the present invention, the nanocellulose refers to nanocellulose having various functional groups, such as carboxymethyl groups, carboxyl groups, and amine groups, whose safety and efficacy have been verified. The nanocellulose may be biodegradable and harmless to the human body, and may replace conventional absorbent chemical products. The nanocellulose is a semi-synthetic hydrophilic cellulose derivative having various functional groups, such as carboxymethyl groups, carboxyl groups, and amine groups, introduced into cellulose molecular units, has high viscosity and a molecular weight of 5,000 to 700,000 Da, and is in the form of granules or fibrous powder, exhibiting a white, yellowish, or grayish color, and having slightly hygroscopic properties, and being odorless and tasteless.

In the present invention, the nanocellulose may be obtained from at least one selected from the group consisting of cotton, woody biomass, and non-woody biomass, but is not limited thereto.

In the present invention, the nanocellulose may have a viscosity of 3,000 to 500,000 cPs, 3,000 to 400,000 cPs, 3,000 to 300,000 cPs, 3,000 to 200,000 cPs, 3,000 to 100,000 cPs, 3,000 to 50,000 cPs, 3,000 to 20,000 cPs, 4,000 to 500,000 cPs, 4,000 to 400,000 cPs, 4,000 to 300,000 cPs, 4,000 to 200,000 cPs, 4,000 to 100,000 cPs, 4,000 to 50,000 cPs, 4,000 to 20,000 cPs, 5,000 to 500,000 cPs, 5,000 to 400,000 cPs, 5,000 to 300,000 cPs, 5,000 to 200,000 cPs, 5,000 to 100,000 cPs, 5,000 to 50,000 cPs, or 5,000 to 20,000 cPs; for example, 5,000 to 20,000 cPs, but is not limited thereto.

In the present invention, the nanocellulose may have a degree of substitution of 0.20 or more, and may have a degree of substitution of 0.20 to 0.90, 0.20 to 0.85, 0.20 to 0.80, 0.20 to 0.75, 0.35 to 0.90, 0.35 to 0.85, 0.35 to 0.80, 0.35 to 0.75, 0.45 to 0.90, 0.45 to 0.85, 0.45 to 0.80, 0.45 to 0.75, 0.55 to 0.90, 0.55 to 0.85, 0.55 to 0.80, 0.55 to 0.75, 0.65 to 0.90, 0.65 to 0.85, 0.65 to 0.80, or 0.65 to 0.75; for example, 0.75, but is not limited thereto.

When the degree of substitution of the nanocellulose is 0.20 or more, it may be soluble in an alkaline aqueous solution, and when the degree of substitution is 0.20 or more, it may be soluble in water, and when the degree of substitution is 0.5 to 0.8, it may not precipitate even in an acidic solution.

In the present invention, the term "degree of substitution" refers to a term mainly used in cellulose chemistry, and means the average number of substituent groups attached per unit of a polymer.

In the present invention, the term "polymer" may mean a compound formed by repeated polymerization of a plurality of unit materials.

In the present invention, when the polymer is a condensation polymer, the degree of substitution may mean the average number of substituent groups attached per base unit, and when the polymer is an addition polymer, the degree of substitution may mean the average number of substituent groups attached per monomeric unit.

In the present invention, the nanocellulose may be cellulose obtained from at least one selected from the group consisting of cotton, woody biomass, and non-woody biomass. Specifically, the woody biomass may be composed of hardwood or softwood, but is not limited thereto. In addition, the non-woody biomass may be at least one selected from the group consisting of hemp, rice, oil palm, banana pseudostem, corn, sorghum, sugarcane stalk, sunflower, bamboo, and silver grass, but is not limited thereto.

In one embodiment of the present invention, the nanocellulose may be obtained from banana pseudostem.

In the present invention, the nanocellulose may be prepared by forming stems of the cotton, the woody biomass, or the non-woody biomass into chips and finely pulverizing the chips; for example, by forming a trunk of banana pseudostem into chips and finely pulverizing the chips.

In the present invention, the chip may be prepared by pulverizing the cotton, the woody biomass, or the non-woody biomass, immersing the pulverized material in chlorine dioxide ($ClO_2$), reacting the same with acetic acid ($CH_3COOH$), and then washing with distilled water.

In the present invention, the nanocellulose may be prepared by re-immersing the chip in ethanol in which sodium hydroxide (NaOH) is dissolved, reacting the same with ethanol in which chloroacetic acid ($CH_2ClCOOH$) is dissolved, and then finely pulverizing the reacted product.

In the present invention, fibers of oil palm may be composed of vascular bundles and parenchyma cells. The vascular bundles are similar to other woody fibers in that they have a long and thin linear shape, whereas the parenchyma cells have a short and round shape. When an oil palm trunk is pulped, fiber-to-fiber bonding may be hindered by the parenchyma cells, and thus a process of separating the parenchyma cells before or after pulping may be required.

In the present invention, separation of parenchyma cells before pulping is a process using a density difference between parenchyma cells and vascular bundles, and separation of parenchyma cells after pulping is a process using a fiber classifier such as a Bauer McNett. The process of separating parenchyma cells after pulping using a fiber classifier may include separating long rod-shaped vascular bundles and short round parenchyma cells using wires having mesh sizes of 28, 48, 100, and 200 for each section. Water should be continuously supplied and vibration should be applied to prevent entanglement of pulp fibers or clogging of the wires.

Pulverization of cotton, woody biomass, and non-woody biomass may be performed by methods such as grinding or a high-pressure homogenizer. Pulverization conditions may be set in consideration of the amount and state of the cotton, woody biomass, and non-woody biomass so that the materials are finally pulverized to a nano size.

In the present invention, an average particle diameter of the nanocellulose may be 10 to 60 nm, 10 to 55 nm, 10 to 50 nm, 15 to 60 nm, 15 to 55 nm, 15 to 50 nm, 20 to 60 nm, 20 to 55 nm, or 20 to 50 nm; for example, 20 to 50 nm, but is not limited thereto.

In the present invention, the soil coagulant may have a weight ratio of the nanocellulose to the starch of 80:20, 70:30, or 60:40; for example, 50:50, but is not limited thereto.

In the present invention, based on a total weight of the soil coagulant, the starch may be included in an amount of 0.001 to 0.1 wt%, 0.001 to 0.05 wt%, 0.001 to 0.02 wt%, 0.001 to 0.018 wt%, 0.001 to 0.016 wt%, 0.001 to 0.014 wt%, 0.001 to 0.012 wt%, 0.001 to 0.01 wt%, 0.001 to 0.005 wt%, 0.005 to 0.1 wt%, 0.005 to 0.05 wt%, 0.005 to 0.02 wt%, 0.005 to 0.018 wt%, 0.005 to 0.016 wt%, 0.005 to 0.014 wt%, 0.005 to 0.012 wt%, 0.005 to 0.01 wt%, 0.01 to 0.1 wt%, 0.01 to 0.05 wt%, 0.01 to 0.02 wt%, 0.01 to 0.018 wt%, 0.01 to 0.016 wt%, 0.01 to 0.014 wt%, or 0.01 to 0.012 wt%; for example, 0.01 wt%, but is not limited thereto.

In the present invention, based on a total weight of the soil coagulant, the nanocellulose may be included in an amount of 0.001 to 0.1 wt%, 0.001 to 0.05 wt%, 0.001 to 0.02 wt%, 0.001 to 0.018 wt%, 0.001 to 0.016 wt%, 0.001 to 0.014 wt%, 0.001 to 0.012 wt%, 0.001 to 0.01 wt%, 0.001 to 0.005 wt%, 0.005 to 0.1 wt%, 0.005 to 0.05 wt%, 0.005 to 0.02 wt%, 0.005 to 0.018 wt%, 0.005 to 0.016 wt%, 0.005 to 0.014 wt%, 0.005 to 0.012 wt%, 0.005 to 0.01 wt%, 0.01 to 0.1 wt%, 0.01 to 0.05 wt%, 0.01 to 0.02 wt%, 0.01 to 0.018 wt%, 0.01 to 0.016 wt%, 0.01 to 0.014 wt%, or 0.01 to 0.012 wt%; for example, 0.01 wt%, but is not limited thereto.

In the present invention, the soil coagulant may have a water absorption capacity of 200 g or more per 1 g thereof; specifically, 200 g to 290 g, 200 g to 280 g, 200 g to 270 g, 210 g to 290 g, 210 g to 280 g, or 210 g to 270 g per 1 g thereof; for example, 210 g, but is not limited thereto.

In the present invention, a water absorption rate of the soil coagulant may be 20,000% or more; specifically, 20,000% to 29,000%, 20,000% to 28,000%, 20,000% to 27,000%, 21,000% to 29,000%, 21,000% to 28,000%, or 21,000% to 27,000%; for example, 27,000%, but is not limited thereto.

In the present invention, the soil coagulant may be biodegraded by 80.0% or more in soil over 28 days; specifically, 80.0% to 99.0%, 80.0% to 96.0%, 80.0% to 93.0%, 80.0% to 90.0%, 85.0% to 99.0%, 85.0% to 96.0%, 85.0% to 93.0%, 85.0% to 90.0%, 88.0% to 99.0%, 88.0% to 96.0%, 88.0% to 93.0%, or 88.0% to 90.0%; for example, 89.0%, but is not limited thereto.

In the present invention, the soil coagulant may be in a liquid, gel, or powder form, but is not limited thereto.

The present invention also relates to a method for preparing an eco-friendly soil coagulant, comprising: (S10) obtaining nanocellulose having a viscosity of 3,000 to 500,000 cPs from at least one selected from the group consisting of cotton, woody biomass, and non-woody biomass; (S20) mixing the nanocellulose obtained in step (S10) with starch to prepare a hydrogel; (S30) drying the hydrogel prepared in step (S20) to obtain a dried hydrogel; and (S40) pulverizing a product of step (S30) to obtain the eco-friendly soil coagulant.

In the present invention, the nanocellulose of step (S10) may have a viscosity of 3,000 to 500,000 cPs, 3,000 to 400,000 cPs, 3,000 to 300,000 cPs, 3,000 to 200,000 cPs, 3,000 to 100,000 cPs, 3,000 to 50,000 cPs, 3,000 to 20,000 cPs, 4,000 to 500,000 cPs, 4,000 to 400,000 cPs, 4,000 to 300,000 cPs, 4,000 to 200,000 cPs, 4,000 to 100,000 cPs, 4,000 to 50,000 cPs, 4,000 to 20,000 cPs, 5,000 to 500,000 cPs, 5,000 to 400,000 cPs, 5,000 to 300,000 cPs, 5,000 to 200,000 cPs, 5,000 to 100,000 cPs, 5,000 to 50,000 cPs, or 5,000 to 20,000 cPs; for example, 5,000 to 20,000 cPs, but is not limited thereto.

In the present invention, the term "dissolution" refers to a process in which nanocellulose is mixed with a sufficient amount of purified water so that the nanocellulose is dispersed and mixed in the purified water.

In the present invention, step (S20) is a step of preparing a hydrogel using purified water, wherein the purified water serves as a dissolution solution for mixing nanocellulose and starch, and the purified water may be neutral with a pH selected from the group consisting of 6, 7, and 8, but is not limited thereto.

In the present invention, the dissolution solution in step (S20) may include nanocellulose in an amount of 5.0 to 9.0 wt%, 5.0 to 8.5 wt%, 5.0 to 8.0 wt%, 5.0 to 7.5 wt%, 5.5 to 9.0 wt%, 5.5 to 8.5 wt%, 5.5 to 8.0 wt%, 5.5 to 7.5 wt%, 6.0 to 9.0 wt%, 6.0 to 8.5 wt%, 6.0 to 8.0 wt%, 6.0 to 7.5 wt%, 6.5 to 9.0 wt%, 6.5 to 8.5 wt%, 6.5 to 8.0 wt%, or 6.5 to 7.5 wt%, based on a total weight of the dissolution solution; for example, 6.5 to 7.5 wt%, but is not limited thereto.

In the present invention, the dissolution solution in step (S20) may include starch in an amount of 1.0 to 5.0 wt%, 1.0 to 4.5 wt%, 1.0 to 4.0 wt%, 1.0 to 3.5 wt%, 1.5 to 5.0 wt%, 1.5 to 4.5 wt%, 1.5 to 4.0 wt%, 1.5 to 3.5 wt%, 2.0 to 5.0 wt%, 2.0 to 4.5 wt%, 2.0 to 4.0 wt%, 2.0 to 3.5 wt%, 2.5 to 5.0 wt%, 2.5 to 4.5 wt%, 2.5 to 4.0 wt%, or 2.5 to 3.5 wt%, based on a total weight of the dissolution solution; for example, 2.5 to 3.5 wt%, but is not limited thereto.

In the present invention, the step (S20) of preparing the hydrogel refers to a process in which starch swells due to heat and moisture, resulting in changes in physicochemical properties or structure, thereby increasing viscosity, water solubility, and/or volume.

In the present invention, step (S20) may include dispersing nanocellulose and starch by applying shear force in water at room temperature or elevated temperature, and crosslinking the nanocellulose and the starch with each other.

In the present invention, step (S20) may be performed at a temperature of 60 to 90°C, 60 to 85°C, 60 to 80°C, 65 to 90°C, 65 to 85°C, 65 to 80°C, 70 to 90°C, 70 to 85°C, or 70 to 80°C; for example, 70 to 80°C, but is not limited thereto.

In the present invention, step (S20) may be performed for 30 to 120 minutes, 30 to 90 minutes, 60 to 120 minutes, or 60 to 90 minutes; for example, 60 to 90 minutes, but is not limited thereto.

In the present invention, step (S30) may include drying a mixture of crosslinked nanocellulose and starch placed on a tray, and the drying method may be at least one selected from the group consisting of hot air, vacuum, far-infrared radiation, near-infrared radiation, spray drying, freeze drying, and drying, but is not limited thereto.

In the present invention, step (S30) may be performed at a temperature of 80 to 95°C, 80 to 90°C, 85 to 95°C, or 85 to 90°C; for example, 85 to 90°C. When the drying step is performed at a temperature lower than 80°C, there may be a problem in that the hydrogel is not completely dried and is only partially dried, and when the drying step is performed at a temperature higher than 95°C, there may be a problem in that the hydrogel is carbonized or browned due to thermal denaturation, thereby reducing absorbency.

In the present invention, step (S30) may be performed by drying for 18 hours or more, and may be performed for 18 to 48 hours, 18 to 44 hours, 18 to 40 hours, 18 to 36 hours, 18 to 32 hours, 18 to 28 hours, 20 to 48 hours, 20 to 44 hours, 20 to 40 hours, 20 to 36 hours, 20 to 32 hours, or 20 to 28 hours; for example, 24 hours, but is not limited thereto.

In the present invention, the dried hydrogel of step (S30) may be in the form of a dried film, but is not limited thereto.

In the present invention, step (S40) may include pulverizing and crushing a product of step (S30) using a pulverizer, and the pulverizing method may be at least one selected from the group consisting of a roll mill, pin mill, bead mill, basket mill, cutter mill, ball mill, grind mill, cutter mill, and crusher, but is not limited thereto.

The present invention also relates to a wildfire spread suppressing agent comprising an eco-friendly soil coagulant comprising starch and nanocellulose, wherein the nanocellulose is obtained from at least one selected from the group consisting of cotton, woody biomass, and non-woody biomass, wherein the nanocellulose has a viscosity of 3,000 to 500,000 cPs, and wherein an aldehyde group of the starch is acetal-crosslinked with a hydroxyl group of the nanocellulose to form a polymer.

The present invention also relates to a forest damage restoration agent comprising an eco-friendly soil coagulant comprising starch and nanocellulose, wherein the nanocellulose is obtained from at least one selected from the group consisting of cotton, woody biomass, and non-woody biomass, wherein the nanocellulose has a viscosity of 3,000 to 500,000 cPs, and wherein an aldehyde group of the starch is acetal-crosslinked with a hydroxyl group of the nanocellulose to form a polymer.

Hereinafter, for better understanding of the present invention, the present invention will be described in detail with reference to the following examples. However, the examples according to the present invention may be modified into various other forms, and the scope of the present invention should not be construed as being limited to the examples described below. The examples of the present invention are provided by way of example to help a specific understanding of the present invention.

**Preparation Example 1. Preparation of a Soil Coagulant Comprising Starch and Nanocellulose**

**1-1. Preparation of Nanocellulose**

First, banana pseudostem was pulverized into powder and immersed in ethanol. After immersion in ethanol, ethanol in which NaOH was dissolved was added, and the mixture was reacted at 70 °C for 1 hour to activate the material. Ethanol in which MCA (monochloroacetic acid) was dissolved was added to the activated material, followed by a chemical pretreatment reaction at 70 °C for 1 hour. Thereafter, the material was washed and subjected to nanonization using a grinder to prepare nanocellulose.

As a result of observation of the prepared nanocellulose using a transmission electron microscope (TEM), it was confirmed that the particle diameter of the nanocellulose was in the range of 20 to 50 nm.

In addition, as a result of measuring the viscosity of the prepared nanocellulose, it was confirmed that the nanocellulose exhibited high viscosity, showing a viscosity of 5,000 to 20,000 cPs in a 1% suspension state.

**1-2. Preparation of Soil Coagulant**

A soil coagulant was prepared by mixing starch with the nanocellulose prepared as described above. As the starch, tapioca and corn were used in a 1:1 mixture.

The nanocellulose obtained through nanonization and the starch were mixed at predetermined ratios to induce gelation. Specific ratios are as shown in Table 1 below. In each example, the amount of nanocellulose was 50 g in Example 1, 60 g in Example 2, 70 g in Example 3, and 80 g in Example 4. The weight ratios of nanocellulose to starch were 50:50 in Example 1, 60:40 in Example 2, and 70:30 in Example 3. The mixture was mixed at 70 °C for 1 hour so that physical crosslinking within the gel and gelatinization of the starch could occur.

[Table 1]

| Composition and Content (wt% based on a total of 5,000 g) | Example 1 | Example 2 | Example 3 |
|---|---|---|---|
| Nanocellulose | 0.01 | 0.012 | 0.014 |
| Starch | 0.01 | 0.008 | 0.006 |
| Purified water | To 100 | To 100 | To 100 |

After mixing, the gelled mixture was dried at 80 °C for 24 hours, and then pulverized using a mixer to obtain the soil coagulants of the examples shown in Table 1, each having a total mass of 5,000 g including purified water.

**Experimental Example 1. Measurement of Water Absorption Capacity and Water Absorption Rate of Soil Coagulant**

In order to identify a composition of a soil coagulant exhibiting optimal gel-forming ability upon water immersion, the water absorption rates of Examples 1 to 3 were compared with those of Comparative Example 1 (synthetic polymer absorbent, SAP 100%) and Comparative Example 2 (electron-beam crosslinked CMC).

The water absorption capacity and water absorption rate were measured using a modified teabag method of the United States Environmental Protection Agency (EPA) (MOISTURE ABSORPTION/RETENTION, DRY STARCH POWDERS Modified Teabag Method).

First, 1 L of distilled water was placed in a beaker, and the beaker was placed in a constant-temperature water bath to adjust the temperature to 37 °C, followed by maintaining equilibrium for 30 minutes. The weight of an empty nonwoven fabric teabag ($T_{ovendry}$) was measured, and the weight of the absorbent ($S_{ovendry}$) was fixed at 0.20 g.

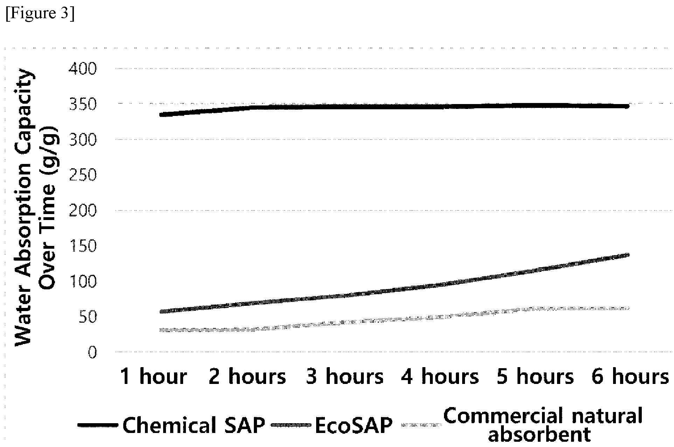

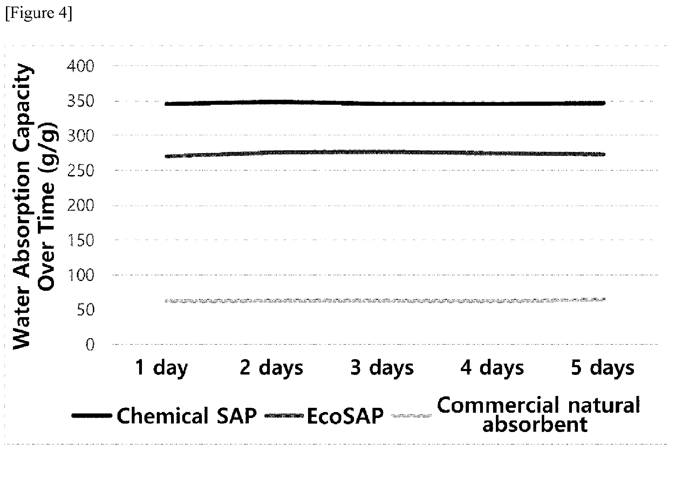

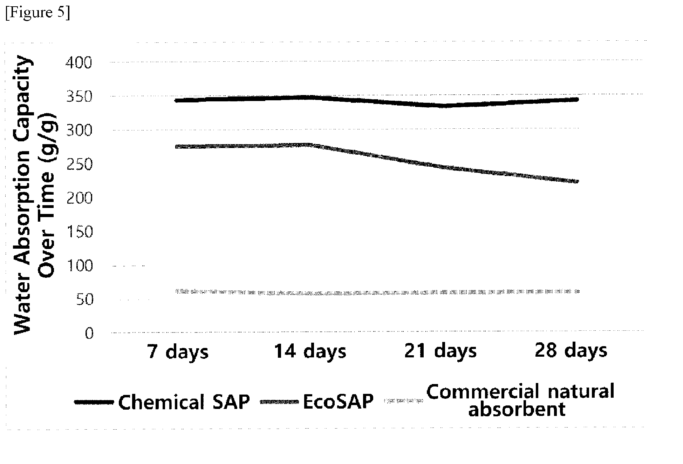

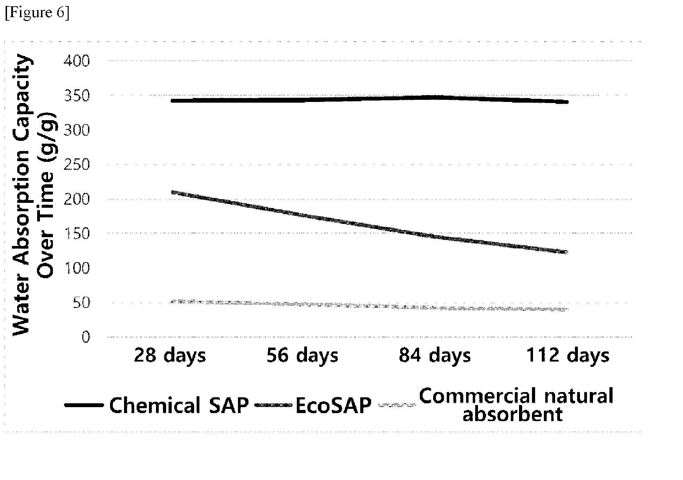

Thereafter, the empty nonwoven fabric teabag and the teabag containing the absorbent were immersed in the beaker for 1 hour to 112 days. After immersion, the teabags were recovered, and moisture on the outside of the teabags was removed using paper towels. The wet weight of the empty nonwoven fabric teabag ($T_{swelling}$), the wet weight of the teabag containing the absorbent [$(T+S)_{swelling}$], and the dry weight of the absorbent ($S_{ovendry}$) were measured. The measured values were substituted into Equation 1 below to calculate the water absorption capacity, and the results are shown in Tables 2 to 5 and FIGS. 3 to 6. The same procedure was performed for Comparative Example 1 and Comparative Example 2. (In FIGS. 3 to 6, EcoSAP = Example 1, chemical SAP = Comparative Example 1, and commercially available natural absorbent = Comparative Example 2.)

[Equation 1]

$$Absorption\ capacity\,(g/g) = \frac{(T+S)_{swelling} - T_{swelling} - S_{ovendry}}{S_{ovendry}}$$

Absorption capacity: water absorption capacity

[Table 2]

| Water Absorption Capacity Over Time (g/g) | Example 1 | Example 2 | Example 3 | Comparative Example 1 | Comparative Example 2 |
|---|---|---|---|---|---|
| 1 hour | 57 | 62 | 65 | 335 | 31 |
| 2 hours | 69 | 81 | 89 | 345 | 32 |
| 3 hours | 80 | 83 | 94 | 346 | 42 |
| 4 hours | 95 | 98 | 101 | 346 | 49 |
| 5 hours | 115 | 126 | 131 | 348 | 61 |
| 6 hours | 137 | 161 | 196 | 347 | 62 |

[Table 3]

| Water Absorption Capacity Over Time (g/g) | Example 1 | Example 2 | Example 3 | Comparative Example 1 | Comparative Example 2 |
|---|---|---|---|---|---|
| 1 day | 270 | 281 | 290 | 345 | 62 |
| 2 days | 276 | 280 | 294 | 348 | 63 |
| 3 days | 277 | 279 | 289 | 345 | 63 |
| 4 days | 275 | 282 | 292 | 345 | 62 |
| 5 days | 273 | 281 | 295 | 346 | 65 |

[Table 4]

| Water Absorption Capacity Over Time (g/g) | Example 1 | Example 2 | Example 3 | Comparative Example 1 | Comparative Example 2 |
|---|---|---|---|---|---|
| 7 days | 275 | 284 | 293 | 343 | 61 |
| 14 days | 277 | 285 | 290 | 347 | 57 |
| 21 days | 243 | 265 | 271 | 333 | 58 |

(continued)

| Water Absorption Capacity Over Time (g/g) | Example 1 | Example 2 | Example 3 | Comparative Example 1 | Comparative Example 2 |
|---|---|---|---|---|---|
| 28 days | 210 | 248 | 264 | 342 | 51 |

[Table 5]

| Water Absorption Capacity Over Time (g/g) | Example 1 | Example 2 | Example 3 | Comparative Example 1 | Comparative Example 2 |
|---|---|---|---|---|---|
| 28 days | 210 | 248 | 264 | 342 | 51 |
| 56 days | 176 | 201 | 225 | 343 | 47 |
| 84 days | 145 | 164 | 189 | 347 | 42 |
| 112 days | 123 | 147 | 172 | 340 | 40 |

As can be seen from Table 2, the water absorption capacities of Examples 1 to 3 within 6 hours were measured to be approximately 137 to 196 g/g, which were lower than the water absorption capacity of 335 g/g measured for Comparative Example 1, which is a synthetic polymer absorbent (SAP). However, compared to the water absorption capacity of 62 g/g for Comparative Example 2, the values were higher by +220.9% to 316.1%.

As can be seen from Table 3, the maximum water absorption capacities of Examples 1 to 3 observed after one day were measured to be 277 to 295 g/g, corresponding to 79.5% to 84.7% of the maximum water absorption capacity of Comparative Example 1, confirming that the performance was not significantly inferior. In contrast, Comparative Example 2 exhibited a markedly lower water absorption capacity at a level of 18.6% compared to Examples 1 to 3 and Comparative Example 1.

As can be seen from Tables 4 and 5, Examples 1 to 3 and Comparative Example 2 showed a tendency for the water absorption capacity to gradually decrease due to biodegradation, whereas Comparative Example 1 maintained a constant water absorption capacity because it was not biodegraded.

That is, Examples 1 to 3 exhibited a significantly superior water absorption capacity compared to Comparative Example 2, showed a maximum water absorption capacity similar to that of Comparative Example 1, and at the same time were confirmed to undergo biodegradation.

**Experimental Example 2. Evaluation of Biodegradability of Soil Coagulant**

Biodegradability of the soil coagulant was evaluated by measuring the amount of dissolved organic carbon (DOC) through the ultimate aerobic biodegradability of organic matter in an aqueous liquid medium, in accordance with the KS I ISO 7827 method for measuring biodegradability in water, and was evaluated using the equation 2 shown below. Specifically, the soil coagulant of Example 1 was evaluated by measurement over 28 days.

[Equation 2]

$$D_t = \left( 1 - \frac{\rho_t - \rho_{Bt}}{\rho_0 - \rho_{B0}} \right) \times 100$$

$\rho_0$ :     the average DOC concentration (mg/L) of each test flask $F_T$ at time 0
$\rho_{Bo}$ :     the average DOC concentration (mg/L) of the blank test flask $F_B$ at time 0
$\rho_t$ :     the average DOC concentration (mg/L) of each test flask $F_T$ at time $t$
$\rho_{Bt}$ :     the average DOC concentration (mg/L) of the blank test flask $F_B$ at time $t$

As a result of measuring the average DOC concentration in the test flask over 28 days and calculating the value using the above equation, the biodegradability of the soil coagulant of Example 1 was found to be 89.0%.

**Experimental Example 3. Measurement of Non-toxicity and Stability of Soil Coagulant**

In order to confirm the stability of the prepared soil coagulant, Example 1 was used as a sample, and 5 g of the sample was tested under conditions of a temperature of $(40\pm2)°C$ and a humidity of $(75\pm5)%$. Qualitative tests were examined at the initial stage (0 weeks), after 12 weeks, and after 24 weeks.

**3-1. Appearance and Identification Tests**

The appearance test was conducted by placing 5 g of the sample on a watch glass and visually confirming the appearance, and the identification test was conducted as follows: 1) a viscous solution was prepared by mixing 1 g of the sample with 50 mL of hot water, and 10 mL of barium chloride was added to 10 mL of the solution to confirm a white fine precipitate; 2) water was added to 1 mL of the solution to make 10 mL, and 0.5 mL of chromotropic acid reagent was added dropwise thereto, followed by heating for 10 minutes, to confirm a reddish-purple color; and 3) one drop of iodine reagent was added to 5 mL of the solution to confirm a bluish-purple color.
As a result of the tests, 1) a white fine precipitate was confirmed, 2) a reddish-purple color was confirmed, and 3) a bluish-purple color was confirmed.

**3-2. Purity Tests**

<Alkalinity Test>

A test solution was prepared by dissolving 0.5 g of the sample in 50 mL of water, and four drops of phenolphthalein reagent were added to 10 mL of the test solution to confirm whether a pale red color appeared.
As a result of the test, no pale red color appeared.

<Chloride Test>

Ten milliliters of dilute nitric acid was added to 10 mL of the test solution and mixed, followed by heating in a water bath until a cotton-like precipitate was formed and then cooling. The mixture was centrifuged at 3,000 rpm for 5 minutes, the supernatant was collected, and the precipitate was washed three times with 10 mL of water and centrifuged again for 5 minutes. The collected supernatant and washings were combined, water was added to make 200 mL, and 50 mL thereof was taken and compared with a reference solution containing 0.45 mL of 0.01 mol/L hydrochloric acid.
As a result of the test, the solution was not darker than the reference solution, confirming that no chloride was present.

<Sulfate Test>

One milliliter of hydrochloric acid was added to 10 mL of the test solution used in the alkalinity test, followed by heating in a water bath until a cotton-like precipitate was formed and then cooling. The mixture was centrifuged at 3,000 rpm for 5 minutes, and thereafter the same procedure as in the chloride test was repeated by washing three times with 10 mL of water and centrifuging. The solution was compared with a reference solution containing 0.40 mL of 0.005 mol/L sulfuric acid.
As a result of the test, the solution was not darker than the reference solution, confirming that no sulfate was present.

<Silicate Test>

One gram of the sample was accurately weighed and placed in a platinum crucible, heated over a weak flame to carbonize the sample, and then ignited at 500°C to ash the sample. After cooling, 20 mL of dilute hydrochloric acid was added, the crucible was covered with a watch glass, and the mixture was gently boiled for 30 minutes. The watch glass was removed, and the mixture was heated on a water bath to evaporate to dryness, followed by heating again for 1 hour. Thereafter, 10 mL of boiling water was added and mixed, and the mixture was filtered using quantitative filter paper (Type 5C). The residue was washed with boiling water, and silver nitrate reagent was added to the washings until no turbidity appeared. The filter paper together with the residue was dried and ignited again until constant weight was obtained.

[Equation 3]

$$\text{Silicate (\%)} = \frac{m_2 - m_0}{m_1 - m_0} \times 100$$

$m_0$ : weight of the dish (g)
$m_1$ : weight of the dish and sample before ignition (g)
$m_2$ : weight of the dish and sample after ignition (g)

As a result of the test calculated using the above equation 3, the average values were confirmed to be 1.1% at 0 weeks, 0.51% at 12 weeks, and 0.30% at 24 weeks.

<Heavy Metal Test>

One gram of the sample was tested in accordance with Method 2 of the General Test Methods "66. Heavy Metal Test" of the Korean Pharmacopoeia (Notice of the Ministry of Food and Drug Safety), and a reference solution was prepared by adding 2 mL of a lead standard solution.
As a result of the test, the solution was not darker than the reference solution, confirming that no heavy metals were present.

<Arsenic Test>

Twenty milliliters of nitric acid was slowly added to 2.5 g of the sample, followed by heating until the mixture became fluid. After cooling, 5 mL of sulfuric acid was added and heated until white fumes were generated, and this procedure was repeated until the solution became colorless to pale yellow. After cooling, 15 mL of a saturated ammonium hydroxide solution was added and heated until white fumes were generated, followed by addition of water to prepare 25 mL of a test solution. The test was conducted in accordance with the standard color comparison method and procedure of the General Test Methods "22. Arsenic Test" of the Korean Pharmacopoeia (Notice of the Ministry of Food and Drug Safety).
As a result of the test, the solution was not darker than the standard solution, confirming that no arsenic was present.

Industrial Applicability

The present invention has an object to provide a biodegradable eco-friendly soil coagulant which is non-toxic and biodegradable and is capable of absorbing a large amount of water, and thus can function as a wildfire spread suppressing agent and a forest damage restoration agent.

**Claims**

1.  An eco-friendly soil coagulant comprising starch and nanocellulose, wherein the nanocellulose is obtained from at least one selected from the group consisting of cotton, woody biomass, and non-woody biomass, wherein the nanocellulose has a viscosity of 3,000 to 500,000 cPs, and wherein an aldehyde group of the starch is acetal-crosslinked with a hydroxyl group of the nanocellulose to form a polymer.

2.  The eco-friendly soil coagulant of claim 1, wherein the starch is at least one selected from the group consisting of rhizome starch, cereal starch, and glutinous cereal starch.

3. The eco-friendly soil coagulant of claim 1, wherein the nanocellulose has a degree of substitution of 0.20 or more.

4. The eco-friendly soil coagulant of claim 1, wherein the nanocellulose has an average particle diameter of 10 to 60 nm.

5. The eco-friendly soil coagulant of claim 1, wherein, based on a total weight of the soil coagulant, the starch is included in an amount of 0.001 to 0.1 wt% and the nanocellulose is included in an amount of 0.001 to 0.1 wt%.

6. The eco-friendly soil coagulant of claim 1, wherein the soil coagulant has a water absorption capacity of 200 g or more per 1 g thereof.

7. The eco-friendly soil coagulant of claim 1, wherein the soil coagulant has a water absorption rate of 20,000% or more.

8. The eco-friendly soil coagulant of claim 1, wherein the soil coagulant is biodegraded by 80.0% or more in soil over 28 days.

9. The eco-friendly soil coagulant of claim 1, wherein the soil coagulant is in a liquid, gel, or powder form.

10. A method for preparing an eco-friendly soil coagulant, comprising:

(S10) obtaining nanocellulose having a viscosity of 3,000 to 500,000 cPs from at least one selected from the group consisting of cotton, woody biomass, and non-woody biomass;
(S20) mixing the nanocellulose obtained in step (S10) with starch to prepare a hydrogel;
(S30) drying the hydrogel prepared in step (S20) to obtain a dried hydrogel; and
(S40) pulverizing a product of step (S30) to obtain the eco-friendly soil coagulant.

11. The method for preparing an eco-friendly soil coagulant of claim 10, wherein step (S20) is performed by mixing for 30 to 120 minutes at a temperature of 60 to 90 °C.

12. The method for preparing an eco-friendly soil coagulant of claim 10, wherein step (S30) is performed by drying for 18 hours or more at a temperature of 80 to 95 °C.

13. A wildfire spread suppressing agent comprising the soil coagulant of claim 1.

14. A forest damage restoration agent comprising the soil coagulant of claim 1.

[Figure 1]

| Obtaining nanocellulose having a viscosity of 3,000 to 500,000 cPs from at least one selected from the group consisting of cotton, woody biomass, and non-woody biomass | ~ (S10) |

⬇

| Mixing the nanocellulose obtained in step (S10) with starch to prepare a hydrogel | ~ (S20) |

⬇

| Drying the hydrogel prepared in step (S20) to obtain a dried hydrogel | ~ (S30) |

⬇

| Pulverizing a product of step (S30) to obtain the eco-friendly soil coagulant | ~ (S40) |

[Figure 2]

[Figure 3]

[Figure 4]

**Water Absorption Capacity Over Time (g/g)**

| | 1 day | 2 days | 3 days | 4 days | 5 days |

—— Chemical SAP ——EcoSAP ········ Commercial natural absorbent

[Figure 5]

[Figure 6]

## INTERNATIONAL SEARCH REPORT

| International application No. |
|---|
| **PCT/KR2023/017699** |

| A. | CLASSIFICATION OF SUBJECT MATTER |
|---|---|

**C09K 17/32**(2006.01)i; **C09K 21/06**(2006.01)i; C09K 103/00(2006.01)n

According to International Patent Classification (IPC) or to both national classification and IPC

| B. | FIELDS SEARCHED |
|---|---|

Minimum documentation searched (classification system followed by classification symbols)

C09K 17/32(2006.01); B01J 20/24(2006.01); B01J 20/30(2006.01); C04B 24/24(2006.01); C04B 28/26(2006.01); C09D 7/61(2018.01); C09D 7/65(2018.01); C09K 101/00(2006.01); C09K 17/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 셀룰로오스(cellulose), 응집제(coagulant), 전분(starch), 화학흡수제(super absorbent polymer, SAP), 알데하이드기(aldehyde group), 아세탈 가교(acetal crosslinking)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2018-0126124 A (LEE, Seung Hoon) 27 November 2018 (2018-11-27)<br>See claims 1 and 2, and paragraphs [0016] and [0019]-[0023]. | 1-14 |
| Y | KR 10-2205294 B1 (ASIA NANOTECH CO., LTD.) 20 January 2021 (2021-01-20)<br>See claims 6, 8, 10, 12, 13 and 15-18, paragraphs [0008]-[0010], [0031], [0037] [0080], [0085], [0092] and [0104], and table 2. | 1-14 |
| A | KR 10-2022-0072828 A (EHIME PREFECTURE et al.) 02 June 2022 (2022-06-02)<br>See claims 1-14. | 1-14 |
| A | KR 10-0922196 B1 (ETOROAD CO., LTD.) 19 October 2009 (2009-10-19)<br>See claims 1-10. | 1-14 |
| A | KR 10-1937980 B1 (JOEUN INDUSTRY INC.) 14 January 2019 (2019-01-14)<br>See claims 1-7. | 1-14 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 May 2024** | **02 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/017699**

| Patent document cited in search report | | | Publication date (day/month/year) | Patent family member(s) | | | Publication date (day/month/year) |
|---|---|---|---|---|---|---|---|
| KR | 10-2018-0126124 | A | 27 November 2018 | KR | 10-2023695 | B1 | 23 September 2019 |
| KR | 10-2205294 | B1 | 20 January 2021 | WO | 2021-261684 | A1 | 30 December 2021 |
| KR | 10-2022-0072828 | A | 02 June 2022 | CA | 3152128 | A1 | 01 April 2021 |
| | | | | CN | 114514294 | A | 17 May 2022 |
| | | | | CN | 114514294 | B | 02 May 2023 |
| | | | | EP | 4019599 | A1 | 29 June 2022 |
| | | | | JP | 2021-054917 | A | 08 April 2021 |
| | | | | JP | 7395132 | B2 | 11 December 2023 |
| | | | | US | 2022-0363933 | A1 | 17 November 2022 |
| | | | | WO | 2021-060480 | A1 | 01 April 2021 |
| KR | 10-0922196 | B1 | 19 October 2009 | | None | | |
| KR | 10-1937980 | B1 | 14 January 2019 | CN | 110079329 | A | 02 August 2019 |
| | | | | CN | 110079329 | B | 19 March 2021 |
| | | | | CN | 110079330 | A | 02 August 2019 |
| | | | | CN | 110079330 | B | 23 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230107186

**Non-patent literature cited in the description**

- *Preliminary Survey on Nationwide Topsoil Erosion*, 2012